Europäisches Patentamt

European Patent Office

Office européen des brevets

(19)

(11) Publication number: **0 152 257**

A1

# EUROPEAN PATENT APPLICATION

(12)

(21) Application number: 85300740.9

(22) Date of filing: 04.02.85

(51) Int. Cl.⁴: **F 16 D 33/08**

(30) Priority: 03.02.84 GB 8402955

(43) Date of publication of application:
21.08.85 Bulletin 85/34

(84) Designated Contracting States:
BE DE FR GB IT NL

(71) Applicant: FLUIDRIVE ENGINEERING COMPANY
LIMITED
Broad Lane
Bracknell Berkshire, RG 12 3BH(GB)

(72) Inventor: Carter, Donald H.
22 Florence Road
Fleet Hants(GB)

(72) Inventor: Nowell, Michael E.
19 Ling Drive
Lightwater Surrey(GB)

(74) Representative: Valentine, Francis Anthony
Brinsley et al,
REDDIE & GROSE 16 Theobalds Road
London WC1X 8PL(GB)

(54) Fluid couplings.

(57) A fluid coupling having a vaned impeller (8) and a runner (11) which together define a toroidal working circuit (W) for a liquid. A restricted cooling flow to an external cooler is ensured by leak-off nozzles (13). To increase the flow, particularly when the coupling is running at high slip for extended periods in a partially-filled state, a further outlet is opened by a thermostatically controlled valve (20,30) the sensitive element of which is immersed in liquid from the radially outermost part of the working circuit (W).

FIG.3

FLUID COUPLINGS

The present invention relates to fluid couplings of the type comprising coaxially mounted vaned impeller and runner elements, means enabling working liquid to flow at a restricted rate from the working circuit for cooling purposes and means for returning cooled liquid to the working circuit. The invention is particularly, but not exclusively, applicable to scoop control couplings in which the working liquid which leaves the working circuit at a restrictive rate enters a rotatble reservoir chamber in which is provided an adjustable scoop that serves to return liquid from the reservoir chamber, normally through an external cooler, to the working circuit, the adjustment of the position of the scoop determining the degree of filling of the working circuit and thus the torque transmitting characteristics of the coupling. Variable filling couplings and scoop control couplings in particular have been in wide use for a long time and enable a driven machine, such as a boiler feed pump to be driven at a speed which is controlled by varying the filling of the working circuit of the coupling, for example by adjustment of the position of the scoop. Examples of scoop controlled couplings are described in British Patent Specification Nos. 493703 and 538217.

As explained, however, in British Patent Specification No. 799234, the rate of flow of liquid leaving the working circuit is greatest when the working circuit is full or nearly full and diminishes as the degree of filling of the working circuit diminishes. In contrast, the rate of generation of heat within the working circuit increases with the increasing degree of slip resulting from a deliberate reduction in the degree of filling of the working circuit. Thus, if the load is required to be driven at a relatively low speed, the degree of filling of the working circuit is reduced, for example by appropriate movement of the scoop, the rate at which heat is generated in the working circuit is increased but the flow rate of heated working liquid from the working circuit is reduced as the result of the reduction in the centrifugal pressure on the liquid at the periphery of the working circuit. Even if an enlarged cooler is fitted in the installation, the flow rate may be insufficient to enable the cooler to dispose all of the heat generated and the temperature of the working liquid may rise to a dangerous value, particularly where the installation is required for use underground in a coal mine.

A subsidiary problem arises where the working liquid has a relatively high coefficient of volumetric expansion as in the case of liquid specified for use in underground coal mine applications. If the temperature of the liquid in the rotating reservoir is high, the degree of filling of the working circuit will be greater than intended.

These problems become particularly severe where the coupling is required to drive a long conveyor belt since it is frequently necessary to drive the conveyor belt at a reduced speed, typically, one-third of normal speed, for reasons of inspection, de-icing or belt-changing. Under such conditions, the rate of heat generation within the working circuit may be near the maximum for prolonged periods of time.

The above mentioned British Specification No. 799234 seeks to overcome this problem by providing pressure-sensitive additional valves to enable liquid to leave the working circuit at an increased rate when the centrifugal pressure is reduced. Such valves must be of relatively complex and expensive construction. Further, its operation depends on the relative levels and pressures of liquid in the working circuit and rotating reservoir. As explained above, this can be upset in cases where a rise in temperature of the working liquid causes a substantial expansion of the liquid and a reduction of its density.

A fluid coupling according to the present invention is characterised in that a further outlet from the working circuit to the reservoir casing is controlled by a thermostatically controlled valve mounted in a radially outer part of a rotating element of the coupling and having it's thermally sensitive element in direct contact with liquid from the radially outer part of the working circuit.

With this arrangement, the operating characteristics of the thermally sensitive element can be chosen so as to open the valve as the liquid temperature attains its maximum acceptable value for normal operation and thereby greatly increase the flow of liquid from the working circuit and thence through the cooler for return to the working circuit.

Advantageously, the thermally sensitive element may be of the wax-filled kind which undergoes a change of phase at the predetermined temperature.

In one arrangement, the thermally sensitive element is mounted in the flow path of liquid leaving the working circuit through the normal leak-off ports.

In another arrangement, the thermally sensitive element is placed in direct contact with the liquid in the working circuit.

In most cases, the thermostatic valve will be located at the radially outermost part of the working circuit.

It has already been suggested in U.S. Patent No. 2423812 to increase the oil flow through a fluid coupling of the kind having leak-off nozzles leading from the working circuit to a rotating reservoir which contains a fixed scoop tube positioned to leave only a thin ring of liquid in the reservoir chamber which is sufficient to maintain a set of diaphragm-operated quick-emptying valves closed so long as some liquid is supplied to the working circuit. The liquid collected by the fixed scoop tube is passed through a stationary valve assembly to a cooler. When the temperature of this liquid exceeds a predetermined value, a thermostatic valve in the stationary valve assembly opens to open the diaphragm operated valves and to increase the flow circulation. Such an arrangement, however, is not directly responsive to an increase in the temperature of the liquid in the working circuit since the liquid leaving the working circuit first forms the thin ring and has an opportunity to be cooled before flowing through the thermostatic valve.

Further, British Patent Specification No. 680,482 describes a drive transmission for selectively connecting one or more of a plurality of prime movers to a single shaft by means including a fluid coupling, inparallel with a clutch, for each prime mover. The couplings are normally empty but are filled to accelerate the prime mover or the driven load prior to engaging the clutch. In the event of over-heating in a coupling, the coupling is to be emptied by a valve member cooperating with a valve seat. The valve member is mounted on a long rod which has a greater co-efficient of thermal expansion than the runner and is fixed at its other end to the radially inner part of the runner. Such an arrangement requires accurate adjustment and, if correctly set to operate when the coupling is full, will not correctly operate when the coupling is only partially filled.

Embodiments of the invention will now be described by way of example, with reference to the accompanying drawings, in which :-

Fig.1 is a longitudinal sectional view of a scoop control coupling in accordance with the present invention,

Fig.2 shows the detail of Fig.1 on an enlarged scale and in section, and

Fig.3 shows an alternative to Fig.2.

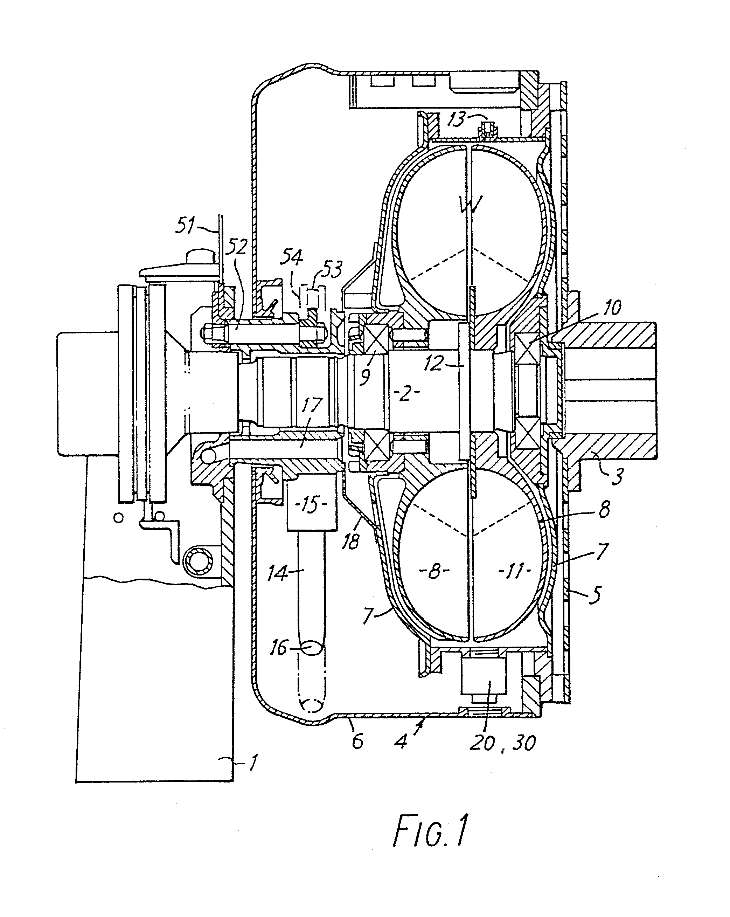

The scoop control coupling shown in Fig.1 is largely of conventional construction in that it comprises a fixed bracket 1 in which an output shaft 2 of the coupling is rotatably supported. An input hub 3 is in use supported on the shaft of the driving motor (not shown) and drives an impeller assembly 4 through a flexible diaphragm 5.

The impeller assembly 4 comprises a rotary reservoir 6, an inner coupling casing 7 and an impeller 8. The impeller assembly 4 is rotatably mounted on the output shaft 2 by bearings 9 and 10. A runner element 11 is bolted to a flange 12 on the output shaft 2. The impeller and runner elements 8 and 11 are dished and vaned and together define a toroidal working circuit W for liquid.

The impeller casing 7 is formed with a set of leak-off nozzles 13 through which working liquid may escape from the working circuit into the rotary reservoir 6. A scoop tube 14 is axially guided in a bushing 15 carried by the bracket 1 and has a scoop orifice 16 which, when immersed in the ring of liquid held within the rotary reservoir 6 collects and removes liquid until it is no longer immersed in the ring of remaining liquid. Liquid collected by the scooping orifice 16 is passed through the scoop tube 14 and thence passes through a passage (not shown)to an external cooler (not shown). The liquid returns from the cooler to an inlet passage 17 leading into a collector ring 18 carried by the casing 7,through which it returns to the working circuit W.

Since the total quantity of liquid in the working circuit W, reservoir 6, external cooler and pipe work remains constant, it is normally assumed that the actual degree of filling of the working circuit at any instant is determined by the scooping orifice 16, this being based on the assumption that when the scoop orifice 16 is moved radially outwards (downwards in Fig.1) to a new position, the filling of the working circuit will be altered in a complementary manner. However, particularly where, for safety reasons, the working liquid is one which has relatively high co-efficient of volumetric expansion, when the scoop is adjusted to a position corresponding to a high degree of slip in the coupling, the liquid in the working circuit will heat up and its density will be reduced. As a result the torque transmitting characteristics will no longer correspond with the expected value for the selected scoop setting. As explained above, the risk of over-heating under high slip operation is increased by the fact that the centrifugal pressure which causes liquid to leave through the leak-off nozzles 13 is reduced.

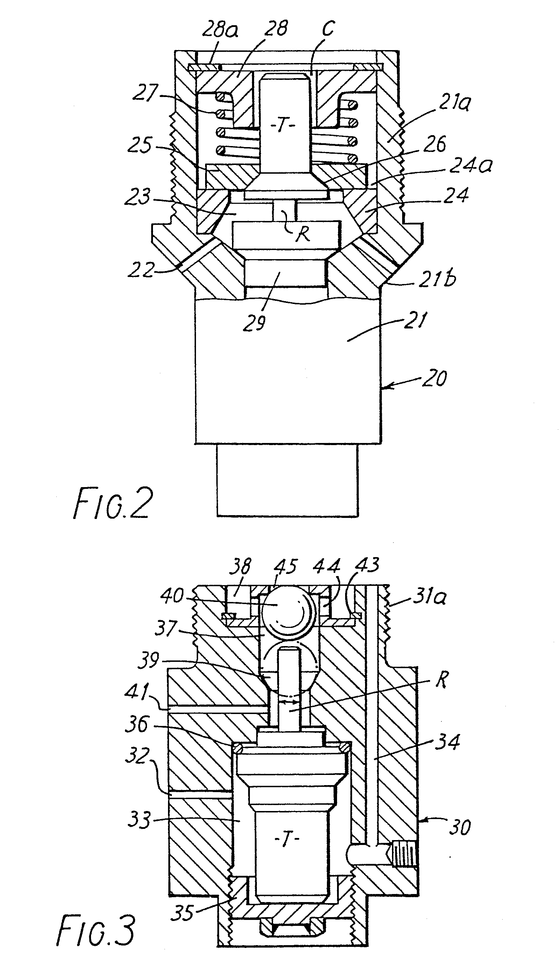

In order to overcome this problem, the coupling shown in Fig. 1 is fitted with one or more additional valves 20 as shown in Fig.2 or 30 as shown in Fig.3. Each form of valve 20,30 uses a wax-filled thermostatic actuator T having an actuator rod R which is extended with considerable force and through a considerable distance when the temperature of the wax within the thermostatic actuator T rises through a predetermined temperature corresponding to a change in phase of the wax. Such actuators are well known for example in operating thermostatic valves in engine cooling systems. Appropriate actuators for the purposes of the invention are available from Western Thomson Controls Limited of Headley Road East, Woodley, Reading, Berks under the trade mark "THERMOVERS".

The valve body 21 is in the form of a plug having a hollow screw threaded portion 21a for engagement in a screw threaded hole in the casing 7. A set of outlet passages 22 lead from the hollow interior of the valve body through the head portion 21B of the valve body. An annular valve seat 24 is located within the hollow valve body and has a flat seat surface 24a which is directed towards the coupling axis and receives a flat valve member 25 having a central bore which engages an inclined shoulder 26 on the body of the actuator T. A spring 27 bears against the valve member 25 and at its other end seats on an abutment ring 28 which is retained in turn by a circlip 28a engaged in a groove in the body. The body of the actuator T extends within the centre of the abutment ring 28 with a substantial clearance C.

Accordingly, the body of the actuator T is in direct contact with the liquid in the working circuit. When the temperature of the wax within the body T rises through the narrow range of temperatures at which its change of phase occurs, the wax expands and pushes the body of the actuator T towards the coupling axis to lift the valve member 25 from its seat 24a, the actuator rod R reacting against a block 29 which may for example be secured to the outer end of the rod R by screw threads and reacts against the interior of the valve body 21. The working liquid in the working circuit then has direct access to the additional outlets 22 as well as to the normal leak-off nozzles 13. The flow rate through the scoop tube and cooler is thus greatly increased and an excessive rise in temperature within the working circuit is thus avoided.

The alternative valve construction 30 shown in Fig.3 in addition to acting as a thermostatic valve also performs the function of a leak-off 13 so that the separate nozzles 13 shown in Fig.1 may be omitted.

The leak-off nozzle is then formed by a passage 32 leading from a space 33 within the valve body 31. A passage 34 leads from the screw-threaded end 31a of the valve body into the space 33 which also contains the thermostatic actuator T. At its outer end, the space 33 is closed by a screwed-in plug 35 which also holds the thermostatic actuator T against the inner end of the space 33 with the interposition of an O-ring 36.

A valve passage 37 leads outwardly from a central depression 38 in the end face of the screw-threaded portion 31a to a frusto-conical seat 39 for a valve member in the form of a ball 40. When the liquid temperature is below the operating temperature of the thermostatic actuator T, the rod R is retracted and the ball 40 under centrifugal action seats on the valve seat 39 closing off access from the passage 37 to one or more additional outlet passages 41. The ball 40 is kept captive in the valve passage 37 by a retainer cap 42 which is retained by a circlip 43 and is drilled with openings 44 and 45.

When the temperature of the normal leak-off flow which passes through the duct 34 space 33 and leak-off nozzles 32, and in contact with the actuator T, exceeds the operating temperature of the latter, the rod R extends towards the coupling access and lifts the ball from the seat 39 to the position shown in full lines in Fig.3 thereby opening the flow path through the additional nozzles 41 with a corresponding increase in the cooling flow through the coupling. When the temperature of the working liquid falls, the rod R retracts and allows the ball 40 to seat thereby closing the additional nozzles 41.

It would be appreciated that the valve shown in Fig.3 will react immediately to a rise in the temperature of the working liquid as the result of the normal 'leak-off' flow passing around the body of the thermostatic actuator T.

Fig.1 shows a manual arrangement for moving the scoop tube 14 to adjust the position of its scoop orifice 16. This arrangement comprises a lever 51 on a shaft 52 which is connected to an upper end extension 53 of the scoop tube 14 by a linkage 54. Other arrangements may of course be used instead.

Similarly, other types of thermostatic actuators may of course be used, for example those employing a sealed bellows containing a liquid whose vapour pressure increases rapidly over the operating range and those employing Shape Memory Effect Metals typically in the form of a spring.

The invention may be applied to pump-filled couplings of various kinds for example those in which the liquid leaving the working circuit is cooled and collected in a sump and is returned either directly (or via a cooler) to the working circuit or to an overhead reservoir for subsequent return to

the working circuit.

CLAIMS:

1. A fluid coupling comprising coaxially mounted vaned impeller (8) and runner (11) elements together defining a toroidal working circuit (W), means (13,32) enabling working liquid to flow at a restricted rate from the working circuit (W) for cooling purposes and means (16,14,17) for returning colled liquid to the working circuit, wherein a further outlet (22,41) from the working circuit (W) is controlled by a thermostatically controlled valve (20,30) mounted in a radially outer part of a rotating element of the coupling and having its thermally sensitive element (T) in direct contact with liquid from the radially outer part of the working circuit.

2. A fluid coupling according to claim 1, wherein the thermally sensitive element (T) is of the kind having a wax filling which undergoes a change of phase at the predetermined temperature.

3. A fluid coupling according to claim 1 or 2, wherein the thermally sensitive element (T) is mounted in the flow path (34,33) of liquid leaving the working circuit through the said normal restricted flow means (32).

4. A fluid coupling according to any of claims 1 to 3, having control means (14, 51, 52, 53 & 54) for varying the degree of filling of the working circuit.

5. A fluid coupling according to any of the preceding claims, wherein the thermostatic valve (20,30) is located radially outwardly of the working circuit (W).

FIG.1

FIG.2

FIG.3

European Patent
Office

**EUROPEAN SEARCH REPORT**

Application number

EP 85 30 0740

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-E- 78 812 (SINCLAIR)<br>* Whole document * | 1,3-5 | F 16 D 33/08 |
| Y | FR-A-1 139 386 (WESER)<br>* Whole document * | 1,3,5 | |
| A | US-A-2 987 887 (FOWLER)<br>* Column 3; figure 2 * | 1,2 | |
| D,A | GB-A- 799 234 (SINCLAIR)<br>* Whole document * | 1,3-5 | |
| D,A | GB-A- 538 217 (SINCLAIR) | | |
| D,A | GB-A- 493 703 (SINCLAIR) | | TECHNICAL FIELDS SEARCHED (Int. Cl.4) |
| | ----- | | F 16 D 33/00 |

The present search report has been drawn up for all claims

| Place of search | Date of completion of the search | Examiner |
|---|---|---|
| THE HAGUE | 07-05-1985 | FLORES E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82